# EUROPEAN PATENT SPECIFICATION

(11) **EP 3 088 569 B1**
(45) Date of publication and mention of the grant of the patent: **03.01.2018**
(21) Application number: 16164168.3
(22) Date of filing: 22.11.2010
(51) Int. Cl.: C25C 1/08, C25C 1/16, C25C 7/02

(54) **NICKEL ELECTROWINNING METHOD**
VERFAHREN ZUR ELEKTROLYTISCHEN NICKELGEWINNUNG
PROCÉDÉ D'EXTRACTION ÉLECTROLYTIQUE DE NICKEL

(30) Priority: 08.12.2009 JP 2009278607
(43) Date of publication of application: 02.11.2016
(62) Divisional of application: 10835830.0
(73) Proprietor: The Doshisha, Kyoto-shi, Kyoto 602-8580 (JP)
(72) Inventor: Morimitsu, Masatsugu, Kyoto (JP)
(74) Representative: Piotrowicz, Pawel Jan Andrzej

(56) References cited:
- WO-A1-2009/151044
- JP-A- 2004 238 697
- US-A- 3 718 551
- US-A- 6 139 705
- US-A1- 2009 288 856

## Description

### TECHNICAL FIELD

The present invention relates to an electrowinning method for electroextracting nickel from a chloride-based electrolyte.

### BACKGROUND ART

Generally, in metal electrowinning, an anode and a cathode are dipped into a solution (hereinafter, an electrolyte) containing ions of a metal to be recovered and are brought into conduction, thereby depositing the metal on the cathode. An anode often used is made of lead or a lead alloy. Examples of the electrolyte used include various electrolytes, such as sulfuric acid-based and chloride-based electrolytes.

For example, a sulfuric acid-based electrolyte that contains zinc ions extracted from a zinc ore is used in zinc electrowinning. In such zinc electrowinning, zinc is deposited on the cathode, and the main reaction on the anode is oxygen evolution. In addition, oxidation of divalent manganese cations mingled into the electrolyte during the zinc ion extraction process occurs on the anode, and manganese compounds, such as manganese oxyhydroxide (MnOOH) and manganese dioxide (MnO₂), are deposited on the anode. Such manganese compounds have extremely low catalytic properties with respect to oxygen evolution and also have low conductivity, and therefore they increase the oxygen evolution potential, resulting in an increase in electrolysis voltage. Moreover, in the case where a lead electrode or a lead alloy electrode is used as the anode, divalent cobalt cations might be added to the electrolyte for the purpose of enhancing the durability of the electrode. In such a case, a side reaction occurs on the anode where divalent cobalt cations are oxidized, generating trivalent cobalt cations, which react with the electrode to generate a compound. In the case where electrolysis lasts for a long period of time, such a compound precipitates in the electrolyte as sludge. Thereafter, the precipitate is partially dissolved into the electrolyte, so that lead and cobalt ions elute and are mingled into zinc generated on the cathode, resulting in reduced purity of the zinc metal.

Similarly, a sulfuric acid-based electrolyte is also used in cobalt and nickel electrowinning. In such a case also, cobalt or nickel is deposited on the cathode, and oxygen evolution occurs on the anode as a main reaction, so that divalent manganese cations, which are present in the electrolyte as impurities, cause a side reaction as mentioned above, resulting in an increased electrolysis voltage. Moreover, in cobalt electrowinning, divalent cobalt cations, which are present in the electrolyte, are reduced on the cathode, so that a cobalt metal is deposited, and oxidation of divalent cobalt cations, along with oxygen evolution, occurs on the anode, resulting in cobalt oxyhydroxide (CoOOH). Cobalt oxyhydroxide has extremely low catalytic properties with respect to oxygen evolution and also has low conductivity, and therefore it raises the electrolysis voltage as in the case of manganese compounds.

Furthermore, in cobalt and nickel electrowinning, a chloride-based electrolyte might be used. For example, cobalt electrowinning uses a hydrochloric acid electrolyte which contains divalent cobalt cations extracted from a cobalt-containing ore. In the case where such an electrolyte is used, cobalt is deposited on the cathode, and chlorine evolution occurs on the anode as a main reaction. However, oxidation of divalent cobalt cations contained in the electrolyte occurs on the anode as a side reaction, so that cobalt oxyhydroxide is deposited on the anode, causing a raised electrolysis voltage as in the case mentioned above. Moreover, in the case of nickel electrowinning using a chloride-based electrolyte, if divalent manganese cations are present in the electrolyte, manganese oxyhydroxide or manganese dioxide is deposited on the anode, causing a raised ed electrolysis voltage, as described earlier.

As described above, in zinc, cobalt, and nickel electrowinning, the main reaction on the anode is oxygen evolution or chlorine evolution, and in the case where oxygen evolution occurs as the main reaction, an anode made of lead or a lead alloy is often used. Lead or lead alloy electrodes are advantageous in that they are low-cost, but they have a high overvoltage for oxygen evolution, hence a high electrolysis voltage, and have an issue in that lead ions elute into the electrolyte, as described above, so that the purity of a metal deposited on the cathode is reduced. Moreover, they have low catalytic properties with respect to chlorine evolution, and are not preferable in that overvoltage is higher than in the case of oxide evolution. Accordingly, in recent years, insoluble electrodes which have their conductive substrates, such as titanium, coated with a catalytic layer containing noble metal or noble metal oxide, have been increasingly used as anodes for overcoming such issues. For example, Patent Document 1 discloses a conventional copper electrowinning method which uses an insoluble electrode covered with an active coating containing iridium oxide.

Patent Document 2 describes an electrode for oxygen generation having an electroconductive substrate and a catalytic layer formed on the electroconductive substrate, the catalytic layer including amorphous iridium oxide.

Patent Document 3 describes an electrode including a conductive substrate, a first layer of a mixture comprising iridium oxide in a crystalline phase and tantalum oxide in an amorphous phase on a portion of an outer surface of the conductive substrate, and a second layer of the mixture comprising iridium oxide in an amorphous phase and tantalum oxide in an amorphous phase on an outer surface of the first layer.

Patent Document 4 describes an anode for electrolytic winning of zinc that can suppress the precipitation of a manganese compound on the anode. Also described is an anode for electrolytic winning of cobalt that can suppress the precipitation of cobalt oxyhydroxide on the anode. The anode for electrolytic winning of zinc includes an electroconductive base and a catalyst layer containing amorphous iridium oxide provided on the electroconductive base. Also described is a method for electrolytic winning of zinc using the anode for electrolytic winning of zinc. The anode for electrolytic winning of cobalt incldues an electroconductive base and a catalyst layer containing amorphous iridium oxide or amorphous ruthenium oxide provided on the electroconductive base. Also described is a method for electrolytic winning of cobalt using the anode for electrolytic winning of cobalt.

Patent Document 5 describes an anode having a coating consisting essentially of titanium oxide and ruthenium oxide and having a specific X-ray diffraction pattern.

Patent Document 6 describes a compound electrode incorporating a lead substrate utilizing the lead as a support structure. This support structure provides a surface that engages a mesh member. The mesh member has front and back surfaces with the back surface facing the lead support structure. At least the front surface of the mesh member is an active surface.

### Prior Art Document

### Patent Document

Patent Document 1: Japanese Laid-Open Patent Publication No. 2007-162050
Patent Document 2: JP 2004-238697 A
Patent Document 3: US 2009/288856 A1
Patent Document 4: WO 2009/151044 (Article 54(3) EPC)
Patent Document 5: US 3,718,551 A
Patent Document 6: US 6,139,705 A

### DISCLOSURE OF THE INVENTION

### PROBLEMS TO BE SOLVED BY THE INVENTION

Electrowinning using the anode described in Patent Document 1 does not have an issue due to the aforementioned elution of lead ions. In addition, the issue with a high electrolysis voltage can be solved to a certain degree. However, even the use of such an anode cannot solve various issues caused by an insulating side reaction product being deposited on the anode due to a side reaction.

These issues will be described below taking zinc electrowinning and nickel electrowinning as examples. Specifically, in zinc electrowinning or nickel electrowinning in which a sulfuric acid-based electrolyte is used, when the conventional insoluble electrode is used as an anode, manganese ions are oxidized on the anode to change from the divalent to trivalent cations before oxygen evolution, as is expected, and the trivalent manganese cations react with water and are changed to insoluble manganese oxyhydroxide, which is deposited/accumulated on the anode. The manganese oxyhydroxide might be further oxidized and deposited/accumulated as manganese dioxide.

Unlike the catalytic layer of the insoluble electrode, such accumulated manganese compounds do not have high catalytic properties with respect to oxygen evolution. Moreover, manganese oxyhydroxide has extremely low conductivity and provides electrical insulation, and therefore it inhibits electron exchange that should occur at the interface between the electrolyte and the anode. Accordingly, accumulation of the manganese compounds on the anode results in inhibited catalytic properties of the insoluble electrode, a raised oxygen evolution potential, and an increased electrolysis voltage. That is, conventional electrowinning using the insoluble electrode described in Patent Document 1, has an issue in that:
(1) the electrolysis voltage can be reduced at the early stage of electrolysis, but the electrolysis voltage rises as manganese compounds are accumulated, resulting in a large amount of power being consumed at the time of electrolysis.

In addition to this, conventional electrowinning has the following issues due to accumulation of manganese compounds on the anode:
(2) non-uniform current distribution on the anode causes nonuniform metal deposition on the cathode;
(3) dendritically grown metal on the cathode reaches the anode, causing short circuit between the anode and the cathode; and
(4) to avoid the short-circuit issue, it is necessary to lengthen an inter-electrode distance between the anode and the cathode, resulting in an increased electrolysis voltage due to ohmic loss in the electrolyte.

Furthermore, when a task for removing manganese compounds from the anode is performed in order to avoid the above issues, the following issues are brought about:
(5) electrolysis needs to be suspended during the task and, therefore, cannot be performed without interruption; and
(6) the catalytic layer is damaged when removing the manganese compounds, reducing the durability of the insoluble electrode.

On the other hand, also in conventional cobalt electrowinning in which a chloride-based electrolyte is used, insulating cobalt oxyhydroxide is continuously deposited/accumulated on the insoluble electrode, as is expected, so that the same issues with the manganese compounds as specified in (1) to (6) above are brought about.

Furthermore, conventional cobalt electrowinning also has the following issues:
(7) divalent cobalt cations, which are expected to be reduced on the cathode, are consumed around the anode to generate cobalt oxyhydroxide; and
(8) cobalt oxyhydroxide grows to the outside of an anode bag provided around the anode, so that chlorine evolution occurs outside the anode bag, releasing chlorine, which is harmful to the human body, in the environment where electrowinning is performed.

The present invention has been made under the above circumstances, and a problem thereof is to provide an electrowinning method capable of decreasing an electrolysis voltage compared to conventional electrowinning which uses a lead or lead alloy electrode or an insoluble electrode as an anode and suppressing deposition and accumulation of a side reaction product on the anode and a rise of the electrolysis voltage caused thereby.

### SOLUTION TO THE PROBLEMS

The present inventor carried out various studies to solve the above problem, and arrived at the present invention based on findings that an electrode having a catalytic layer, containing amorphous ruthenium oxide, formed on a conductive substrate is used as an anode for electrowinning of nickel using a chloride-based electrolyte.

In a first electrowinning system, predetermined electrolysis current is applied between an anode and a cathode placed in an electrolyte, thereby depositing a desired metal on the cathode, the electrolyte is a sulfuric acid-based or chloride-based solution containing ions of the metal, and the anode has a catalytic layer, containing amorphous iridium oxide, formed on a conductive substrate.

Here, preferable conductive substrates are valve metals, such as titanium, tantalum, zirconium and niobium, valve metal-based alloys, such as titanium-tantalum, titanium-niobium, titanium-palladium and titanium-tantalum-niobium, and conductive diamonds (e. g. , boron-doped diamonds). In addition, they can take various shapes, including plate-like, meshed, rod-like, sheet-like, tubular, linear, porous plate-like shapes, and shapes of three-dimensional porous materials composed of bonded spherical metal particles. In addition to the foregoing, conductive substrates to be used may be metals other than valve metals, such as iron and nickel, or conductive ceramics, having surfaces coated with the aforementioned valve metals, alloys, or conductive diamonds.

A substantial reactive surface area (effective surface area) of the amorphous iridium oxide in the catalytic layer is larger than that of crystalline iridium oxide. Accordingly, by incorporating amorphous iridium oxide in the catalytic layer, it is rendered possible to achieve an anode having high catalytic activity for oxygen evolution, i.e., the anode has a low oxygen evolution potential and is capable of promoting oxygen evolution. Moreover, oxygen evolution accompanies proton (H⁺) generation and, therefore, as oxygen evolution is promoted, the electrolyte on the anode surface has a higher proton concentration.

When a sulfuric acid-based electrolyte is used, the main reaction on the anode is oxygen evolution. This oxygen evolution is promoted by a catalytic layer containing amorphous iridium oxide, so that the proton concentration on the anode surface naturally increases. On the other hand, when a chloride-based electrolyte is used, the main reaction on the anode is normally chlorine evolution, which does not accompany proton generation, but amorphous iridium oxide has extremely high catalytic activity for oxygen evolution and, therefore, oxygen evolution occurs simultaneously with chlorine evolution, which is the main reaction. Accordingly, either in the case where a chloride-based electrolyte is used or in the case where a sulfuric acid-based electrolyte is used, the proton concentration on the anode surface is high.

On the other hand, in the case where divalent manganese cations are present in the electrolyte, the divalent manganese cations are oxidized on the anode, as mentioned earlier, resulting in manganese oxyhydroxide, which becomes manganese dioxide as the oxidization further progresses. However, in the case where oxygen evolution is promoted, the oxygen evolution potential is low, which suppresses generation of manganese dioxide. Moreover, both generation of manganese oxyhydroxide and generation of manganese dioxide accompany proton generation, and particularly the reaction where manganese oxyhydroxide and protons are generated from trivalent manganese cations is promoted when the pH of the electrolyte in which the reaction occurs is high (the proton concentration is low) and is suppressed when the pH is low (the proton concentration is high).

Here, in the case where electrowinning is carried out with constant electrolysis current, the electrolysis current is consumed by oxygen evolution and manganese compound generation (side reaction), which simultaneously progress on the anode. Moreover, oxygen evolution is promoted by using an anode with a catalytic layer, containing amorphous iridium oxide, formed thereon, therefore, in the first electrowinning system, the proportion of electrolysis current to be consumed by oxygen evolution is high, and the proton concentration on the anode surface is high as well. Consequently, manganese compound generation, which is a side reaction, is suppressed, so that deposition/accumulation of a manganese compound (side reaction product) on the anode is suppressed.

As described above, firstly, in the first electrowinning system, a catalytic layer, which contains amorphous iridium oxide having high catalytic activity for oxygen evolution, is formed so that the oxygen evolution potential is reduced, making it possible to decrease the electrolysis voltage. Secondly, it is possible to keep a manganese compound from being generated and accumulated on the anode in a side reaction as a result of promotion of oxygen evolution, so that the electrolysis voltage can be prevented from being increased when electrowinning continues over a long period of time.

Furthermore, the catalytic layer of the first electrowinning system preferably further contains amorphous tantalum oxide.

In the case of a catalytic layer containing amorphous iridium oxide and amorphous tantalum oxide, the amorphous tantalum oxide promotes amorphization of the iridium oxide, thereby further reducing the oxygen evolution potential, and the tantalum oxide functions as a binder to enhance compactibility of the catalytic layer, resulting in improved durability. Note that metallic elements in the catalytic layer are preferably 45 to 99 at.%, particularly preferably 50 to 95 at.%, of iridium oxide in terms of metal and preferably 55 to 1 at.%, particularly preferably 50 to 5 at.%, of tantalum oxide in terms of metal.

A first electrowinning method according to the present invention to solve the problem includes contacting an anode with a chloride-based electrolyte comprising nickel, and extracting nickel from the electrolyte. Wherein the anode comprises a conductive substrate and a catalytic layer formed on the conductive substrate, and the catalytic layer contains a composite oxide of amorphous ruthenium oxide and amorphous titanium oxide, so that manganese oxyhydride and/or manganese dioxide deposition on the anode is suppressible.

In the first electrowinning method according to the present invention also, the conductive substrate of the first electrowinning system can be used.

The amorphous ruthenium oxide in the catalytic layer has higher catalytic activity for chlorine evolution than crystalline ruthenium oxide. Accordingly, by incorporating amorphous ruthenium oxide in the catalytic layer, it is rendered possible to achieve an anode having a low chlorine evolution potential and capable of promoting chlorine evolution.

Here, in the case where electrowinning is carried out using a chloride-based electrolyte with constant electrolysis current, the electrolysis current is consumed by chlorine evolution and generation of a side reaction product, which simultaneously progress on the anode. Moreover, chlorine evolution is promoted by using an anode with a catalytic layer, containing amorphous ruthenium oxide, formed thereon, therefore, in the first electrowinning method according to the present invention, the proportion of electrolysis current to be consumed by chlorine evolution is high, and side reaction product generation is relatively suppressed. For example, in nickel electrowinning, manganese oxyhydroxide and manganese dioxide, which are side reaction products, are kept from being generated and accumulated on the anode.

As described above, firstly, in the first electrowinning method according to the present invention, a catalytic layer, which contains amorphous ruthenium oxide having high catalytic activity for chlorine evolution, is formed so that the chlorine evolution potential is reduced, making it possible to decrease the electrolysis voltage. Secondly, it is possible to keep a side reaction product from being generated and accumulated on the anode as a result of promotion of chlorine evolution, so that the electrolysis voltage can be prevented from being increased when electrowinning continues over a long period of time.

By using a composite oxide of amorphous ruthenium oxide and titanium oxide, amorphization of ruthenium oxide can be promoted, thereby further reducing the chlorine evolution potential, and ruthenium and titanium are in a solid solution as the composite oxide, which functions as a binder to keep the catalytic layer from wearing, peeling, flaking and cracking, resulting in improved durability. Note that metallic elements in the catalytic layer are preferably 10 to 90 at.%, particularly preferably 25 to 35 at.%, of ruthenium oxide in terms of metal and preferably 90 to 10 at.%, particularly preferably 75 to 65 at.%, of titanium oxide in terms of metal.

Furthermore, in the first electrowinning method according to the invention, an intermediate layer made of tantalum or a tantalum alloy can be formed between the conductive substrate and the catalytic layer of the anode.

Forming the intermediate layer makes it possible to prevent the conductive substrate from being oxidized and corroded by an acidic electrolyte penetrating through the catalytic layer, resulting in improved durability of the anode. The intermediate layer is beneficial particularly in the case where electrowinning is carried out over a long period of time using electrolysis current with its density raised to about 0.1 A/cm². Note that sputtering, ion plating, CVD, electroplating, etc., can be used as methods for forming the intermediate layer.

The first electrowinning method has been described for nickel electrowinning.

### EFFECT OF THE INVENTION

The present invention can provide an electrowinning method capable of suppressing accumulation of manganese oxyhydride and/or manganese dioxide on an anode during nickel electrowinning with a chloride-based electrolyte and a rise of an electrolysis voltage caused thereby.

Since the electrowinning method according to the present invention can suppress accumulation of manganese oxyhydride and/or manganese dioxide on an anode, not only the aforementioned issue (1) but also the aforementioned issues (2) to (6) can be solved as well.

### BRIEF DESCRIPTION OF THE DRAWINGS

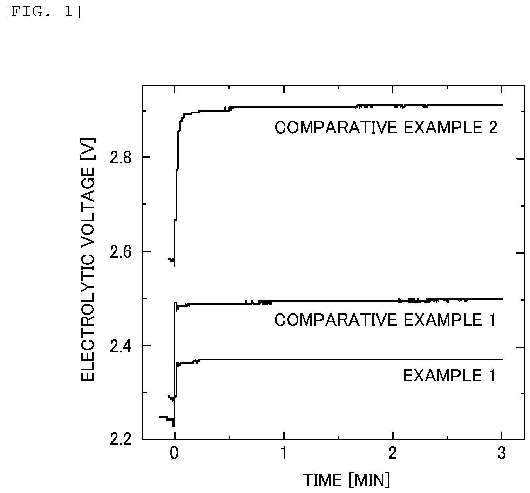

FIG. 1 is a graph for electrolysis voltage where zinc electrowinning is carried out using electrowinning systems according to Example 1, Comparative Example 1, and Comparative Example 2.

### Detailed Description

Examples 1 to 4 are Reference Examples not according to the invention.

### [Zinc Electrowinning Using Sulfuric Acid-Based Electrolyte]

### (Example 1)

In Example 1, zinc electrowinning was carried out using a first electrowinning system, which included a sulfuric acid-based electrolyte containing zinc ions, an anode having a catalytic layer, containing amorphous iridium oxide, formed on a conductive substrate, and a cathode placed in the electrolyte along with the anode.

In anode production, initially, a commercially available titanium plate (5 cm long, 1 cm wide, 1 mm thick) was dipped and etched in a 10% oxalic acid solution at 90°C for 60 minutes, and then washed with water and dried. A coating solution was prepared by adding iridium chloride acid hexahydrate (H₂IrCl₆·6H₂O) and tantalum chloride (TaCl₅) to a butanol (n-C₄H₉OH) solution containing 6 vol.% concentrated hydrochloric acid, such that the molar ratio of iridium to tantalum was 80 : 20 and a total amount of iridium and tantalum was 70 mg/mL in terms of metal. The coating solution was applied to the dried titanium plate and then dried at 120°C for 10 minutes before thermal decomposition for 20 minutes in an electric furnace maintained at 360°C. The coating, drying and thermal decomposition was repeated five times in total, thereby producing an anode having a catalytic layer formed on the titanium plate, which acted as a conductive substrate.

The anode was structurally analyzed by X-ray diffraction, resulting in an X-ray diffraction pattern with no diffraction peak profile corresponding to either IrO₂ or Ta₂O₅. That is, the catalytic layer of the anode was formed of amorphous iridium oxide and amorphous tantalum oxide.

A zinc plate (2cm x 2cm) was used as the cathode, and the electrolyte used was a sulfuric acid-based electrolyte obtained by dissolving 0.8 mol/L ZnSO₄ in distilled water and adjusting the pH to -1.1 with sulfuric acid. Moreover, the anode was embedded in a polytetrafluoroethylene holder, so that the electrode area to be contacted with the electrolyte was regulated to 1 cm².

The anode and the cathode were placed in the electrolyte so as to oppose each other at a predetermined inter-electrode distance. Then, an inter-terminal voltage (electrolysis voltage) between the anode and the cathode was measured while carrying out zinc electrowinning in which electrolysis current with current densities of 10 mA/cm², 50 mA/cm², and 100 mA/cm² based on the electrode area of the anode was applied between the anode and the cathode.

### (Comparative Example 1)

In Comparative Example 1, zinc electrowinning was carried out using the same electrowinning system as in Example 1 under the same conditions as in Example 1 except that the thermal decomposition temperature at which to form the catalytic layer was changed from 360°C to 470°C.

The anode according to Comparative Example 1 was structurally analyzed by X-ray diffraction, the result being that a sharp diffraction peak profile corresponding to IrO₂ was recognized but any diffraction peak profile corresponding to Ta₂O₅ was not recognized. That is, the catalytic layer of the anode was made of crystalline iridium oxide and amorphous tantalum oxide.

### (Comparative Example 2)

In Comparative Example 2, zinc electrowinning was carried out using the same electrowinning system as in Example 1 under the same conditions as in Example 1 except that a commercially available Pb-Sb (5% Sb) alloy electrode was used as the anode.

Where the electrowinning systems according to Example 1, Comparative Example 1, and Comparative Example 2 were used in zinc electrowinning with the electrolyte temperature at 30°C, the electrolysis voltage was as shown in FIG. 1 for each system. In addition, the electrolysis voltage at three minutes after the start of electrolysis was shown in Table 1.

**[Table 1]**

| Electrolytic Current Density | Electrolysis Voltage | | | Difference (Improvement) In Electrolysis Voltage | |
|---|---|---|---|---|---|
| | Ex. 1 | Comp. Ex. 1 | Comp. Ex. 2 | Comp. Ex. 1 - Ex. 1 | Comp. Ex. 2 - Ex. 1 |
| 10 mA/cm² | 2.37V | 2.49V | 2.91V | 0.12V | 0.54V |
| 50 mA/cm² | 2.49V | 2.67V | 3.07V | 0.18V | 0.58V |
| 100 mA/cm² | 2.62V | 2.82V | 3.20V | 0.20V | 0.58V |

As shown in Table 1, the electrolysis voltage was 0.12V to 0.20V lower in Example 1, where the catalytic layer containing amorphous iridium oxide was used, than in Comparative Example 1, where the catalytic layer containing crystalline iridium oxide was used. Moreover, the electrolysis voltage was even 0.54V to 0.58V lower in Example 1 than in Comparative Example 2, where the commercially available Pb-Sb alloy electrode was used as the anode. That is, the electrowinning system according to Example 1 succeeded in significantly reducing power consumption for electrolysis.

Furthermore, similar experiments were conducted where the electrolyte temperature was changed to 40°C, 50°C, and 60°C. The results are shown in Table 2 (40°C), Table 3 (50°C), and Table 4 (60°C).

**[Table 2]**

| Electrolytic Current Density | Electrolysis Voltage | | | Difference (Improvement) In Electrolysis Voltage | |
|---|---|---|---|---|---|
| | Ex. 1 | Comp. Ex. 1 | Comp. Ex. 2 | Comp. Ex. 1 - Ex. 1 | Comp. Ex. 2 - Ex. 1 |
| 10 mA/cm² | 2.34V | 2.46V | 2.86V | 0.12V | 0.52V |
| 50 mA/cm² | 2.46V | 2.62V | 3.01V | 0.16V | 0.55V |
| 100 mA/cm² | 2.57V | 2.76V | 3.12V | 0.19V | 0.55V |

**[Table 3]**

| Electrolytic Current Density | Electrolysis Voltage | | | Difference (Improvement) In Electrolysis Voltage | |
|---|---|---|---|---|---|
| | Ex. 1 | Comp. Ex. 1 | Comp. Ex. 2 | Comp. Ex. 1 - Ex. 1 | Comp. Ex. 2 - Ex. 1 |
| 10 mA/cm² | 2.32V | 2.43V | 2.82V | 0.11V | 0.50V |
| 50 mA/cm² | 2.43V | 2.58V | 2.96V | 0.15V | 0.53V |
| 100 mA/cm² | 2.53V | 2.71V | 3.06V | 0.18V | 0.53V |

**[Table 4]**

| Electrolytic Current Density | Electrolysis Voltage | | | Difference (Improvement) In Electrolysis Voltage | |
|---|---|---|---|---|---|
| | Ex. 1 | Comp. Ex. 1 | Comp. Ex. 2 | Comp. Ex. 1 - Ex. 1 | Comp. Ex. 2 - Ex. 1 |
| 10 mA/cm² | 2.29V | 2.41V | 2.77V | 0.12V | 0.48V |
| 50 mA/cm² | 2.40V | 2.55V | 2.91V | 0.15V | 0.51V |
| 100 mA/cm² | 2.49V | 2.66V | 3.03V | 0.17V | 0.54V |

As shown in Tables 2 to 4, the electrolysis voltage was 0.11V to 0.19V lower in Example 1, where the catalytic layer containing amorphous iridium oxide was used, than in Comparative Example 1, where the catalytic layer, containing crystalline iridium oxide, was used. Moreover, the electrolysis voltage was even 0.48V to 0.55V lower in Example 1 than in Comparative Example 2, where the commercially available Pb-Sb alloy electrode was used as the anode. That is, the electrowinning system according to Example 1 succeeded in significantly reducing power consumption for electrolysis as well for the case where the electrolyte temperature was in the range from 40°C to 60°C.

### [Cobalt Electrowinning Using Sulfuric Acid-Based Electrolyte]

### (Example 2)

In Example 2, cobalt electrowinning was carried out using a first electrowinning system, which included a sulfuric acid-based electrolyte containing cobalt ions, an anode having a catalytic layer, containing amorphous iridium oxide, formed on a conductive substrate, and a cathode placed in the electrolyte along with the anode.

The present example used the same anode as in Example 1, i.e., an anode which had a catalytic layer, containing amorphous iridium oxide, formed on a titanium plate and whose electrode area for acting on electrolysis was regulated to 1 cm². Moreover, a cobalt plate (2cm x 2cm) was used as the cathode, and the electrolyte used was a sulfuric acid-based electrolyte obtained by dissolving 0.3 mol/L CoSO₄ in distilled water and adjusting the pH to 2.9 with sulfuric acid.

### (Comparative Example 3)

Comparative Example 3 used the same anode as in Comparative Example 1, i.e., an anode which had a catalytic layer, containing crystalline iridium oxide, formed on a titanium plate and whose electrode area for acting on electrolysis was regulated to 1 cm². Other than that, the same electrowinning system as in Example 2 was used for cobalt electrowinning.

### (Comparative Example 4)

In Comparative Example 4, the same electrowinning system as in Example 2 was used for cobalt electrowinning, except that a commercially available Pb-Sb alloy electrode (5% Sb) was used as the anode.

Where the electrowinning systems according to Example 2, Comparative Example 3, and Comparative Example 4 were used in cobalt electrowinning with electrolysis current having a current density of 10 mA/cm² based on the electrode area of the anode and the electrolyte temperature at 40°C, the electrolysis voltage at three minutes after the start of electrolysis was as shown in the following table.

**[Table 5]**

| Electrolytic Current Density | Electrolysis Voltage | | | Difference (Improvement) In Electrolysis Voltage | |
|---|---|---|---|---|---|
| | Ex. 2 | Comp. Ex. 3 | Comp. Ex. 4 | Comp. Ex. 3 - Ex. 2 | Comp. Ex. 4 - Ex. 2 |
| 10 mA/cm² | 1.91V | 2.01V | 2.08V | 0.10V | 0.17V |

As shown in Table 5, the electrolysis voltage was 0.10V lower in Example 2, where the catalytic layer containing amorphous iridium oxide was used, than in Comparative Example 3, where the catalytic layer containing crystalline iridium oxide was used, and also 0.17V lower in Example 2 than in Comparative Example 4, where the commercially available Pb-Sb alloy electrode was used as the anode. That is, also in cobalt electrowinning using a sulfuric acid-based electrolyte, the electrowinning system according to Example 2 succeeded in significantly reducing power consumption for electrolysis.

### [Nickel Electrowinning Using Chloride-Based Electrolyte]

### (Example 3)

In Example 3, nickel electrowinning was carried out using a first electrowinning system, which included a chloride-based electrolyte containing nickel ions, an anode having a catalytic layer, containing amorphous iridium oxide, formed on a conductive substrate, and a cathode placed in the electrolyte along with the anode.

The present example used the same anode as in Example 1, i.e., an anode which had a catalytic layer, containing amorphous iridium oxide, formed on a titanium plate and whose electrode area for acting on electrolysis was regulated to 1 cm². Moreover, a nickel plate (2cm x 2cm) was used as the cathode, and the electrolyte used was a chloride-based electrolyte obtained by dissolving 0.08 mol/L NiCl₂ in a 0.5 mol/L HCl aqueous solution.

### (Comparative Example 5)

Comparative Example 5 used the same anode as in Comparative Example 1, i.e., an anode which had a catalytic layer, containing crystalline iridium oxide, formed on a titanium plate and whose electrode area for acting on electrolysis was regulated to 1 cm². Other than that, the same electrowinning system as in Example 3 was used for nickel electrowinning.

### (Comparative Example 6)

In Comparative Example 6, the same electrowinning system as in Example 3 was used for nickel electrowinning, except that a commercially available Pb-Sb alloy electrode (5% Sb) was used as the anode.

Where the electrowinning systems according to Example 3, Comparative Example 5, and Comparative Example 6 were used in nickel electrowinning with electrolysis current having a current density of 10 mA/cm² based on the electrode area of the anode and the electrolyte temperature at 40°C, the electrolysis voltage at three minutes after the start of electrolysis was as shown in the following table.

**[Table 6]**

| Electrolytic Current Density | Electrolysis Voltage | | | Difference (Improvement) In Electrolysis Voltage | |
|---|---|---|---|---|---|
| | Ex. 3 | Comp. Ex. 5 | Comp. Ex. 6 | Comp. Ex. 5 - Ex. 3 | Comp. Ex. 6 - Ex. 3 |
| 10 mA/cm² | 1.76V | 1.82V | 2.75V | 0.06V | 0.99V |

As shown in Table 6, the electrolysis voltage was 0.06V lower in Example 3, where the catalytic layer containing amorphous iridium oxide was used, than in Comparative Example 5, where the catalytic layer containing crystalline iridium oxide was used, and also even 0.99V lower in Example 3 than in Comparative Example 6, where the commercially available Pb-Sb alloy electrode was used as the anode. That is, also in nickel electrowinning using a chloride-based electrolyte, the electrowinning system according to Example 3 succeeded in significantly reducing power consumption for electrolysis.

### [Cobalt Electrowinning Using Chloride-Based Electrolyte]

### (Example 4)

In Example 4, cobalt electrowinning was carried out using a second electrowinning system, which included a chloride-based electrolyte containing cobalt ions, an anode having a catalytic layer, containing amorphous ruthenium oxide, formed on a conductive substrate, and a cathode placed in the electrolyte along with the anode.

In anode production, initially, a commercially available titanium plate (5 cm long, 1 cm wide, 1 mm thick) was dipped and etched in a 10% oxalic acid solution at 90°C for 60 minutes, and then washed with water and dried. A coating solution was prepared by adding ruthenium chloride trihydrate (RuCl₃·3H₃O) and titanium n-butoxide (Ti(C₄H₉O)₄) to a butanol (n-C₄H₉OH) solution, such that the molar ratio of ruthenium to titanium was 30 : 70 and a total amount of ruthenium and titanium was 70 mg/mL in terms of metal. The coating solution was applied to the dried titanium plate and then dried at 120°C for 10 minutes before thermal decomposition for 20 minutes in an electric furnace maintained at 340°C. The coating, drying and thermal decomposition was repeated five times in total, thereby producing an anode having a catalytic layer formed on the titanium plate, which acted as a conductive substrate.

The anode was structurally analyzed by X-ray diffraction, resulting in an X-ray diffraction pattern with no diffraction peak profile corresponding to RuO₂, but a weak diffraction line in a broadened pattern corresponding to a RuO₂-TiO₂ solid solution was recognized. That is, the catalytic layer of the anode was made of a composite oxide of amorphous ruthenium oxide and titanium oxide.

A platinum plate (2cm × 2cm) was used as the cathode, and the electrolyte used was a chloride-based electrolyte obtained by dissolving 0.9 mol/L CoCl₂ in distilled water and adjusting the pH to 1.6 with hydrochloric acid. Moreover, the anode was embedded in a polytetrafluoroethylene holder, so that the electrode area for acting on electrolysis was regulated to 1 cm².

The anode and the cathode were placed in the electrolyte so as to oppose each other at a predetermined inter-electrode distance. Then, cobalt electrowinning was carried out for 40 minutes with electrolysis current having a current density of 10 mA/cm² based on the electrode area of the anode and the electrolyte temperature at 60°C.

### (Comparative Example 7)

In Comparative Example 7, cobalt electrowinning was carried out using the same electrowinning system as in Example 4 except that the thermal decomposition temperature at which to form the catalytic layer was changed from 340°C to 450°C.

The anode according to Comparative Example 7 was structurally analyzed by X-ray diffraction, resulting in an X-ray diffraction pattern in which a sharp diffraction peak profile corresponding to a solid solution (composite oxide) of crystalline RuO₂ and TiO₂ was recognized. That is, the catalytic layer of the anode contained crystalline ruthenium oxide but did not contain amorphous ruthenium oxide.

On the basis of the weight of the anodes before and after electrolysis for cobalt electrowinning with the electrowinning systems according to Example 4 and Comparative Example 7, the weight of cobalt oxyhydroxide deposited on the anodes was calculated, and the percentage of the quantity of electrolytic electricity (hereinafter, simply referred to as current efficiency) consumed for generating cobalt oxyhydroxide was calculated. The results are shown in the following table.

**[Table 7]**

| Electrolytic Current Density | Current efficiency | |
|---|---|---|
| | Ex. 4 | Comp. Ex. 7 |
| 10 mA/cm² | 8.3% | 24% |

As shown in Table 7, in Example 4, where the catalytic layer containing amorphous ruthenium oxide was used, the current efficiency was about 1/3 of that in Comparative Example 7, where the catalytic layer containing crystalline ruthenium oxide was used. Specifically, in Example 4, most of the electrolysis current (90% or more) was consumed for chlorine evolution, the main reaction, resulting in a considerable reduction of power required for electrowinning of the same amount of cobalt. Moreover, in Example 4, cobalt oxyhydroxide was kept frombeing accumulated on the anode, thereby suppressing a rise of the electrolysis voltage while electrowinning was continued for a long period of time.

### [Other (Variants)]

Amorphous tantalum oxide can be omitted from the catalytic layers of the electrowinning systems according to Examples 1 to 3, so long as amorphous iridium oxide is at least included. However, from the viewpoint of reducing oxygen evolution potential or increasing durability, the catalytic layers preferably include both amorphous iridium oxide and amorphous tantalum oxide.

Similarly, titanium oxide can be omitted from the catalytic layer of the electrowinning system according to Example 4, so long as amorphous ruthenium oxide is at least included.

Furthermore, the catalytic layers of the electrolysis systems according to Examples 1 to 3 may be formed on protective layers, containing crystalline iridium oxide, formed on the conductive substrates. In the case where a metal such as titanium or tantalum is used as the conductive substrates, the protective layers containing crystalline iridium oxide adhere well to the conductive substrates, and also to the catalytic layers, so that the catalytic layers can be more stably formed on the conductive substrates, resulting in enhanced durability. Particularly suitable for such a protective layer is a mixed oxide layer made of crystalline iridium oxide and amorphous tantalum oxide.

Similarly, in order to achieve enhanced durability, the catalytic layer of the electrolysis system according to Example 4 may be formed on a protective layer, containing crystalline ruthenium oxide, formed on the conductive substrate. Particularly suitable for such a protective layer is a composite oxide layer made of crystalline ruthenium oxide and titanium oxide.

Furthermore, in the case where the current density of the electrolysis current is increased to 0.1 A/cm² or more, an intermediate layer made of tantalum or a tantalum alloy is preferably formed between the conductive substrate and the catalyticlayer. Forming the intermediate layer makes it possible to prevent the conductive substrate from being oxidized and corroded by an acidic electrolyte penetrating through the catalytic layer, resulting in improved durability of the anode. The intermediate layer can be formed by methods such as sputtering, ion plating, CVD, electroplating, etc.

Furthermore, zinc, cobalt, and nickel electrowon in the examples are illustrative.

## Claims

1. A nickel electrowinning method comprising:
contacting an anode with a chloride-based electrolyte comprising nickel; and
extracting nickel from the electrolyte,
wherein the anode comprises a conductive substrate and a catalytic layer formed on the conductive substrate, and the catalytic layer contains a composite oxide of amorphous ruthenium oxide and amorphous titanium oxide, so that manganese oxyhydride and/or manganese dioxide deposition on the anode is suppressible.

2. The nickel electrowinning method according to claim 1, wherein the anode further comprises an intermediate layer made of tantalum or a tantalum alloy, and the intermediate layer is formed between the conductive substrate and the catalytic layer.

## Patentansprüche

1. Verfahren zur elektrolytischen Nickelgewinnung, das Folgendes umfasst:
Inkontaktbringen einer Anode mit einem chloridbasierten Elektrolyten, der Nickel umfasst; und
Extrahieren von Nickel aus dem Elektrolyten,
wobei die Anode ein leitfähiges Substrat und eine katalytische Schicht, die auf dem leitfähigen Substrat ausgebildet ist, umfasst und die katalytische Schicht ein Verbundoxid von amorphem Rutheniumoxid und amorphem Titanoxid enthält, sodass die Abscheidung von Manganoxyhydrid und/oder Mangandioxid auf der Anode unterdrückbar ist.

2. Verfahren zur elektrolytischen Nickelgewinnung nach Anspruch 1, wobei die Anode weiter eine Zwischenschicht umfasst, die aus Tantal oder einer Tantallegierung gefertigt ist, und die Zwischenschicht zwischen dem leitfähigen Substrat und der katalytischen Schicht ausgebildet ist.

## Revendications

1. Procédé d'extraction électrolytique de nickel, comprenant les étapes consistant à :
mettre une anode en contact avec un électrolyte à base de chlorure comprenant du nickel ; et
extraire le nickel à partir de l'électrolyte,
dans lequel l'anode comprend un substrat conducteur et une couche catalytique formée sur le substrat conducteur, et la couche catalytique contient un oxyde composite constitué d'oxyde de ruthénium amorphe et d'oxyde de titane amorphe, de sorte que le dépôt d'oxyhydrure de manganèse et/ou de dioxyde de manganèse sur l'anode peut être supprimé.

2. Procédé d'extraction électrolytique de nickel selon la revendication 1, dans lequel l'anode comprend en outre une couche intermédiaire constituée de tantale ou d'un alliage de tantale, et la couche intermédiaire est formée entre le substrat conducteur et la couche catalytique.
